# EUROPÄISCHE PATENTANMELDUNG

(11) **EP 2 796 322 A1**
(43) Veröffentlichungstag der Anmeldung: **29.10.2014**
(21) Anmeldenummer: 13165197.8
(22) Anmeldetag: 24.04.2013
(51) Int. Cl.: B60Q 1/26, B60R 1/12, F21S 8/10, F21V 8/00

(54) **Leuchtvorrichtung für einen Kraftfahzeug-Außenspiegel und Kraftfahrzeug-Außenspiegel mit einer solchen Leuchtvorrichtung**

(71) Anmelder: Flextronics Automotive GmbH & Co. KG, 72636 Frickenhausen (DE)
(72) Erfinder: Wimbert, Frank Michael, 73277 Owen (DE); Bernhardt, Dimitrij, 73760 Ostfildern (DE)
(74) Vertreter: Kohler Schmid Möbus

(57) **Zusammenfassung**

Eine Leuchtvorrichtung (1) für einen Kraftfahrzeug-Außenspiegel (20), mit einem gekrümmten und durch ein einziges Lichtleiterelement gebildeten Lichtleiter (2), einer Lichtquelle (3), und einem Gehäuse (5) zur Aufnahme des Lichtleiters (2) und der Lichtquelle (3), wobei das Gehäuse (5) eine dem Lichtleiter (2) zugewandte Gehäuseinnenseite (14) aufweist, und wobei der Lichtleiter (2) einenends eine Lichteinkoppelstelle (7) zum Einkoppeln von Licht aus der Lichtquelle (3) in den Lichtleiter (2) entlang einer Ausbreitungsrichtung (8) und anderenends eine Auskoppelstelle (9) zum Auskoppeln des Lichts aufweist, ist dadurch gekennzeichnet, dass das Lichtleiterelement (2) aus einem Streupartikel (12) aufweisenden Material gebildet ist. Auf diese Weise können nicht nur gesetzlich vorgeschriebene Lichtfunktionen erfüllt, sondern darüber hinaus auch Designfunktionen in erweiterter Weise wahrgenommen werden.

## Beschreibung

Die vorliegende Erfindung betrifft eine Leuchtvorrichtung für einen Kraftfahrzeug-Außenspiegel, mit einem gekrümmten und durch ein einziges Lichtleiterelement gebildeten Lichtleiter, einer Lichtquelle, und einem Gehäuse zur Aufnahme des Lichtleiters und der Lichtquelle, wobei das Gehäuse eine dem Lichtleiter zugewandte Gehäuseinnenseite aufweist, und wobei der Lichtleiter einenends eine Lichteinkoppelstelle zum Einkoppeln von Licht aus der Lichtquelle in den Lichtleiter entlang einer Ausbreitungsrichtung und anderenends eine Auskoppelstelle zum Auskoppeln des Lichts aufweist.

### Hintergrund der Erfindung

Die Anforderungen an Kraftfahrzeugleuchten sind heutzutage sehr vielseitig. Zum einen müssen Kraftfahrzeugleuchten gesetzliche Vorgaben, wie zum Beispiel bestimmte Ausleuchtungswinkelbereiche und Ausleuchtungsrichtungen sowie Mindesthelligkeitswerte für eine ausreichende Tagesichtbarkeit, zur sicheren Verkehrsteilnahme erfüllen. Zum anderen gewinnt eine ansprechende optische Erscheinung der Kraftfahrzeugleuchten als ein das Design des Kraftfahrzeugs wesentlich mitbestimmendes Element zunehmend an Bedeutung.

Eine Leuchtvorrichtung der eingangs genannten Art ist beispielsweise bekannt geworden aus der DE 103 56 483 A1. Bei dieser bekannten Leuchtvorrichtung sind auf einer nach außen gebogenen Seite des Lichtleiters mehrere Stufen ausgebildet, die, gesehen in Richtung auf die Auskoppelstelle, jeweils zurückgesetzt angeordnet sind und jeweils eine stirnseitige Auskoppelfläche aufweisen. Durch die bekannte Leuchtvorrichtung ist es möglich, Bereiche, die in Bogenrichtung des Lichtleiters liegen, auszuleuchten und auf diese Weise das Design der Leuchtvorrichtung in einem bestimmten Rahmen zu gestalten.

### Aufgabe der Erfindung

Es ist die Aufgabe der vorliegenden Erfindung, eine Leuchtvorrichtung bereitzustellen, durch die sowohl die gesetzlichen Vorgaben für Kraftfahrzeugleuchten eingehalten werden als auch eine erweiterte Möglichkeit der Beeinflussung des optischen Designs besteht. Die erweiterte Designmöglichkeit soll insbesondere anhand einfacher und kostengünstiger Mittel erfolgen.

### Kurze Beschreibung der Erfindung

Diese Aufgabe wird durch eine Leuchtvorrichtung der eingangs genannten Art gelöst, die dadurch gekennzeichnet ist, dass das Lichtleiterelement aus einem lichtstreuenden Material gebildet ist. Vorteilhafte Ausgestaltungen der Erfindung sind Gegenstand der Unteransprüche.

Erfindungsgemäß wird zum einen das in den Lichtleiter eingekoppelte Licht bzw. werden die in den Lichtleiter eingekoppelten Lichtstrahlen durch den Lichtleiter in Ausbreitungsrichtung zur Auskoppelstelle geleitet, um dort die Ausleuchtung des gesetzlich geforderten Bereichs zu erfüllen. Es handelt sich typischerweise um den gesetzlich geforderten Bereich von Zusatzblinkleuchten für Kraftfahrzeug-Außenspiegel. Zum anderen wird der Strahlengang eines Teils des eingekoppelten Lichts bzw. werden die Strahlengänge einzelner eingekoppelter Lichtstrahlen durch das lichtstreuende Material des Lichtleiters anhand von Lichtstreuung, Lichtbrechung und/oder Lichtbeugung derart beeinflusst, dass der Winkel für die Totalreflexion an der Lichtleiteroberfläche unterschritten wird und somit auch im Bereich zwischen der Einkoppelstelle und der Auskoppelstelle (entlang der Lichtleiterlänge) ein ungerichteter Lichtaustritt dieses Lichtanteils bzw. dieser Lichtstrahlen aus dem Lichtleiter erfolgt. Durch die erfindungsgemäße Leuchtvorrichtung wird somit nicht nur die gesetzlich bei Zusatzblinkleuchten vorgeschriebene Lichtfunktion erfüllt. Darüber hinaus kann das durch das lichtstreuende Material an der Lichtleiteroberfläche ausgekoppelte Licht zu Designzwecken genutzt werden. Das durch das lichtstreuende Materialbeeinflusste Licht wird in diffuser Art und Weise aus dem Lichtleiter ausgekoppelt, sodass beim Betrachter ein angenehmer optischer Eindruck entsteht. Bei der erfindungsgemäßen Leuchtvorrichtung ist mithin durch die zusätzliche diffuse Auskopplung der Lichtanteile die Gestaltungsfreiheit beim Entwurf von Kraftfahrzeug-Außenspiegeln wesentlich erhöht.

Der Lichtleiter der erfindungsgemäßen Leuchtvorrichtung weist zur Anpassung seiner Geometrie an die Geometrie des Kraftfahrzeug-Außenspiegels eine Krümmung auf. Typischerweise folgt der lokale Krümmungsradius des Lichtleiters dem lokalen Krümmungsradius des Kraftfahrzeug-Außenspiegels. Der Lichtleiter ist ferner durch ein einziges Lichtleiterelement gebildet, d.h. außer dem das eingekoppelte Licht führenden Lichtleiterelement sind keine weitere, beispielsweise parallel verlaufende oder in sonstiger Weise angebundene oder angeformte lichtführende Lichtleitelemente an oder in der erfindungsgemäßen Leuchtvorrichtung vorgesehen. Unter einem Lichtleiterelement wird vorliegend ein Element verstanden, das im Betrieb der Leuchtvorrichtung von der Lichtquelle emittiertes Licht mittels Totalreflexion führt. Die Form des Querschnitts des Lichtleiters kann beliebig sein, zum Beispiel rund, oval, eckig, unregelmäßig, ringförmig, etc. Die Lichtquelle ist bevorzugt als eine Leuchtdiode ausgebildet. Aufgrund ihrer hohen Lichtausbeute eignen sich Leuchtdioden besonders gut als Lichtquellen.

Das Gehäuse der erfindungsgemäßen Leuchtvorrichtung besteht in der Regel aus einem lichtundurchlässigen Kunststoffmaterial und die dem Lichtleiter zugewandte Gehäuseinnenseite ist typischerweise durch eine Rückwand des Gehäuses gebildet. Zur Aufnahme des Lichtleiters und der Lichtquelle kann das Gehäuse beispielsweise eine Aussparung aufweisen, innerhalb derer der Lichtleiter zumindest teilweise hineinragt. Der Lichtleiter ist typischerweise über seine Rückseite an dem Gehäuse befestigt, wobei zur Befestigung beispielsweise lichtleiterseitige und/oder gehäuseseitige Rastmittel vorgesehen sein können. Es versteht sich, dass der Lichtleiter auch auf andere Weise an dem Gehäuse gelagert bzw. befestigt sein kann. Die Lichtquelle ist in der Regel im Inneren des Gehäuses angeordnet. Zum einfacheren Austausch der Lichtquelle, beispielsweise bei Defekt, kann die Lichtquelle lösbar im Gehäuse befestigt sein. Die erfindungsgemäße Leuchtvorrichtung kann beispielsweise eine Spiegelblinkleuchte sein.

### Bevorzugte Ausführungsformen

Bei einer bevorzugten Ausführungsform der erfindungsgemäßen Leuchtvorrichtung weist das lichtstreuende Material Streupartikel auf. Streupartikel sind zur Beeinflussung der in den Lichtleiter eintretenden und auf die Partikel auftreffenden Lichtstrahlen durch Lichtstreuung, Lichtbrechung und Lichtbeugung besonders geeignet. Sie bewirken eine besonders effektive und diffuse Auskopplung von in den Lichtleiter eingekoppelter Strahlung. Die Streupartikel sind bevorzugt gleichmäßig im Volumen des Lichtleiterelements bzw. des Lichtleiters verteilt, d.h. es bestehen (im Rahmen der Produktionsgenauigkeit) keine Konzentrationsgradienten innerhalb des Lichtleiterelements bzw. des Lichtleiters. Dadurch wird eine gleichmäßig Beeinflussung der Lichtanteile durch die im Lichtleiter enthaltenen Streupartikel erreicht.

Bei einer weiteren bevorzugten Ausführungsform der Leuchtvorrichtung sind an dem Lichtleiter vorder- und/oder rückseitig optische Strukturen zur lokalen Auskopplung von Licht gebildet. Auf diese Weise können zusätzlich zu der durch die Streupartikel bewirkten diffusen Auskopplung von Lichtanteilen auch noch lokale Lichtakzente gesetzt werden. Dies erhöht den Gestaltungsspielraum bei der Produktenwicklung weiterhin. Derartige Lichtakzente sind grundsätzlich abhängig von der Art bzw. Form der vorder- und/oder rückseitig ausgebildeten lokalen Strukturen. Handelt es sich beispielsweise um punktförmige Strukturen, so werden der durch die Streupartikel bewirkten diffusen Hintergrundbeleuchtung Leuchtakzente in Form von Lichtpunkten überlagert. Die Vorderseite des Lichtleiters (dem Gehäuse abgewandte Seite des Lichtleiters) ist in der Regel in Fahrtrichtung (des Kraftfahrzeug-Außenspiegels) nach vorne bzw. zur Seite hin ausgerichtet und die Rückseite des Lichtleiters (dem Gehäuse zugewandte Seite des Lichtleiters) ist typischerweise in Fahrtrichtung nach hinten ausgerichtet. Besonders bevorzugt sind die optischen Strukturen auf der Rückseite des Lichtleiters ausgebildet.

Bevorzugt ist auch eine Ausführungsform bei der der Lichtleiter dazu ausgebildet ist, eine vorderseitige Öffnung des Gehäuses zu verschließen. Die Außenseite des Lichtleiters erfüllt dann auch gleichzeitig die Funktion einer das Gehäuse dichtend verschließenden Abdeckscheibe. Dadurch, dass das Gehäuse durch den Lichtleiter verschlossen ist, wird die in der Regel im Inneren des Gehäuses angeordnete Lichtquelle vor äußeren Einflüssen, wie beispielsweise Feuchtigkeit, geschützt. Darüber hinaus ist es vorteilhaft, dass durch diese einstückige Ausbildung von Lichtleiter und Abdeckscheibe das durch die Streupartikel ausgekoppelte Licht beim Austritt aus der Leuchtvorrichtung keinen, insbesondere doppelten, Phasenübergang von dem Lichtleiter-Festkörper zu einem zwischen dem Lichtleiter und einer separaten Abdeckscheibe befindlichen Gas (in der Regel Luft) sowie anschließend von dem Gas zu der separaten Abdeckscheibe erfährt. Dadurch können unerwünschte Reflektionen, die sich an solchen Phasenübergängen einstellen können, vermieden werden. Dieser Vorteil ist insbesondere im Bereich der Auskoppelstelle des Lichtleiters gegeben, da in diesem Bereich das Licht gerichtet aus der Leuchtvorrichtung austreten soll. Der Lichtleiter gemäß dieser Ausführungsform dient nicht nur zur Erfüllung der gesetzlichen Ausleuchtung und der designunterstützenden diffusen Auskopplung des Lichts sondern auch als Abdeckscheibe zum Verschließen der Gehäuseöffnung. Dabei erstrecken sich die in dem Lichtleiterelement bzw. dem Lichtleiter enthaltenen Streupartikel typischerweise bis hin zur Außenseite des Lichtleiters bzw. bis zur Außenseite der durch den Lichtleiter gebildeten Abdeckscheibe. Die Streupartikel sind mithin ebenfalls gleichmäßig im Volumen des Lichtleiters verteilt. Um die Gehäuseöffnung zu verschließen, ist die Außenseite des Lichtleiters beispielsweise gekrümmt und somit an die äußere Form der Leuchtvorrichtung bzw. an die äußere Form des Kraftfahrzeug-Außenspiegels angepasst.

Eine zur vorherigen Ausführungsform alternative und ebenfalls bevorzugte Ausführungsform umfasst ferner eine Abdeckscheibe zum Verschließen einer vorderseitigen Öffnung des Gehäuses, die aus einem glasklaren Material gefertigt ist. Das Gehäuseinnere ist somit vorteilhaft durch die Abdeckscheibe vor äußeren Einflüssen, wie Witterung, insbesondere Feuchtigkeit, geschützt. Insbesondere sind die in der Regel im Inneren des Gehäuses angeordnete Lichtquelle sowie deren elektrische Anschlüsse durch den Verschluss geschützt. Durch die Streupartikel des Lichtleitermaterials diffus ausgekoppelte Strahlung wird durch die glasklare Abdeckscheibe transmittiert und vom Gehäuseinneren nach außen abgestrahlt. Der Lichtleiter ist zwischen dem Gehäuse bzw. dessen Gehäuseinnenseite und der Abdeckscheibe angeordnet.

Bei einer bevorzugten Weiterbildung der vorhergehenden Ausführungsform sind die Abdeckscheibe und der Lichtleiter einstückig miteinander verbunden. Durch die Einstückigkeit von Abdeckscheibe und Lichtleiter ist die gemeinsame Herstellung von Abdeckscheibe und Lichtleiter vereinfacht und kostengünstiger. Bei der Verbindung des Lichtleiters mit der Abdeckscheibe kann sowohl eine Vielzahl einzelner Stege als auch ein auf der gesamten Länge des Lichtleiters bzw. der Abdeckscheibe durchgängiger Steg zum Einsatz kommen.

Bei einer weiteren bevorzugten Weiterbildung ist die Abdeckscheibe einenends über einen flächig an die Auskoppelstelle des Lichtleiters angeformten Steg mit dem Lichtleiter verbunden. Durch den flächig an der Auskoppelstelle angeformten Steg wird verhindert, dass sich an der Auskoppelstelle des Lichtleiters ein Luftspalt ausbilden kann. Somit können sich in vorteilhafter Weise keine unerwünschten Reflektionen durch den Phasenübergang vom Lichtleiter-Material zu sich daran anschließender Luft oder andere Gase im Bereich der Auskoppelstelle einstellen. Die Abdeckscheibe kann zur weiteren Material- und Kostenersparnis in besonders bevorzugter Weise ausschließlich über diesen Steg an den Lichtleiter angeformt sein.

Bevorzugt ist ferner eine Ausführungsform der Leuchtvorrichtung bei der der Lichtleiter und/oder die Abdeckscheibe aus Polymethylmethacrylate (PMMA) gefertigt sind. Polymethylmethacrylate sind als Lichtleiter- und Abdeckscheibenwerkstoffe aufgrund ihrer strukturellen Härte, Beständigkeit und ihrer Transmissivität besonders praxistauglich.

Ebenfalls bevorzugt ist eine Ausführungsform, bei der die Gehäuseinnenseite reflektiv ausgebildet ist. Die reflektive Ausbildung kann beispielsweise durch eine reflektive Beschichtung der Gehäuseinnenseite, beispielsweise eine Verspiegelung der Gehäuseinnenseite durch Bedampfen mit Aluminium oder durch eine weiße Beschichtung der Gehäuseinnenseite (diffuse Reflektivität), erreicht werden. Alternativ kann das die Gehäuseinnenseite ausbildende (Kunststoff-)Material des Gehäuses selbst reflektierend aufgebaut sein. Im Falle einer Verspiegelung wirkt die Gehäuseinnenseite als ein Reflektor, der auf die Gehäuseinnenseite treffendes Licht zurück zum Lichtleiter und in Richtung zur Abdeckscheibe hin lenkt. Auf die Gehäuseinnenseite bzw. den Reflektor fallendes Licht kann beispielsweise von dem in den Lichtleiter eingekoppelten Licht stammen, das an den Streupartikeln des Lichtleiters gestreut und in Richtung der Gehäuseinnenseite ausgekoppelt wurde. Ebenso kann es sich um Licht handeln, das direkt aufgrund der Divergenz der Lichtquelle in Richtung der Gehäuseinnenseite ausgestrahlt wurde. In jedem Fall erhöht der Reflektor die Wirksamkeit der Leuchtvorrichtung dahingehend, dass mehr Licht nach außen abgestrahlt wird.

Bei einer bevorzugten Weiterbildung dieser Ausführungsform weist die Gehäuseinnenseite eine Oberflächenstruktur auf, insbesondere eine Oberflächenstruktur mit Noppen und/oder Prismen und/oder Rillen und/oder rauen Abschnitten. Durch die Oberflächenstruktur der Gehäuseinnenseite wird die aus dem Lichtleiter in Richtung Gehäuseinnenseite ausgekoppelte Strahlung diffus bzw. ungerichtet reflektiert. Die auf beispielsweise den Prismen auftreffende Strahlung wird durch die Geometrie und Beschaffenheit der reflektierenden bzw. streuenden Prismenoberfläche in Richtung Lichtleiter gelenkt. Unter einem Prisma wird vorliegend ein geometrischer Körper verstanden, der ein Vieleck als Grundfläche aufweist und dessen Seitenkanten parallel und gleich lang sind.

Bei einer bevorzugten Weiterbildung der vorhergehenden Ausführungsform weist die Oberflächenstruktur eine Mehrzahl an Richtflächen auf, die in eine Vorzugsrichtung, insbesondere in eine zur Ausbreitungsrichtung zwischen 45° und 90° stehenden Richtung, ausgerichtet sind. Durch die Ausrichtung der Richtflächen in den Vorzugsrichtungen kann eine gleichmäßigere Auskopplung der Lichtmenge entlang der Lichtleiterlänge erzielt werden. Die Auskopplung des Lichts durch Streupartikel erfolgt entlang der Ausbreitungsrichtung des Lichts im Lichtleiter kontinuierlich, was dazu führt, dass die Lichtmenge und somit auch die Leuchtdichte typischerweise über die Länge des Lichtleiters abnehmen. Durch die entsprechend ausgerichteten Richtflächen können jedoch von den Streupartikeln in eine Richtung entgegen der ursprünglichen Ausbreitungsrichtung zurückgeworfene Lichtstrahlen wieder in die ursprüngliche Ausbreitungsrichtung gerichtet werden, sodass der vorbeschriebenen Abnahme der Leuchtdichte entgegengewirkt wird und somit eine gleichmäßigere (homogenere) Ausleuchtung möglich ist.

Schließlich ist eine Ausführungsform der Leuchtvorrichtung bevorzugt, bei der die Querschnittsform des Gehäuses derart an die Querschnittsform des Lichtleiters angepasst ist, dass der Lichtleiter von dem Gehäuse zumindest teilweise, insbesondere rückseitig, umschlossen ist. Ein solches Umschließen des Lichtleiters kann beispielsweise durch eine Aussparung im Gehäuse erreicht werden, in die der Lichtleiter zumindest teilweise eingelegt ist. Durch eine derartige Querschnittsform des Gehäuses (insbesondere der die Gehäuseinnenseite bildenden Gehäuserückwand) wird im Falle einer reflektierenden Gehäuseinnenseite das in Richtung Gehäuseinnenseite ausgetretene Licht in sehr effizienter Weise in den Lichtleiter zurückreflektiert und bewirkt eine signifikante Erhöhung der Leuchtdichte des Lichtleiters. Diese kann für verschiedene Abstrahlrichtungen, insbesondere senkrechte und in zur Ausbreitungsrichtung entgegengesetzte Richtungen mehr als verdoppelt sein. Die optische Erscheinung des von der Leuchtvorrichtung ausgestrahlten Lichts wird somit mittelbar beeinflusst.

Die Erfindung betrifft auch einen Kraftfahrzeug-Außenspiegel mit einer erfindungsgemäßen Leuchtvorrichtung. Bei dem Kraftfahrzeug-Außenspiegel ist die Auskoppelstelle des Lichtleiters in eine zumindest komponentenweise entgegen der Fahrtrichtung weisende Richtung ausgerichtet und die Außenseite des Lichtleiters ist an einer, insbesondere in Fahrtrichtung weisenden, Vorderseite des Kraftfahrzeug-Außenspiegels angeordnet und von außen zumindest abschnittsweise sichtbar. Die erfindungsgemäße Leuchtvorrichtung kann in den Kraftfahrzeug-Außenspiegel integriert bzw. eingesetzt werden und als Zusatzblinkleuchte dienen. Die Auskopplung des Lichts an der Auskoppelstelle ermöglicht zum einen die Ausleuchtung des gesetzlich vorgeschriebenen (rückwärtigen) Winkelbereichs und zum anderen das Ausstrahlen von diffuser Strahlung zu Designzwecken nach außen (in Fahrtrichtung nach vorne und/oder seitlich). Es versteht sich, dass die zur Stromversorgung der Lichtquelle erforderlichen elektrischen Leitungen von der erfindungsgemäßen Leuchtvorrichtung nach außen in den Kraftfahrzeug-Außenspiegel geführt sein können.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: einen Längsschnitt durch eine erfindungsgemäße Leuchtvorrichtung mit einem Gehäuse mit strukturierter Gehäuseinnenseite und einer Abdeckscheibe;
- Fig. 1b: eine Detailausschnitt des Längsschnitts der Fig. 1a;
- Fig. 2a: einen Querschnitt durch eine andere erfindungsgemäße Leuchtvorrichtung mit glatter Gehäuseinnenseite und Abdeckscheibe;
- Fig. 2b: einen Querschnitt durch die Leuchtvorrichtung der Fign. 1a,1b;
- Fig. 3: einen Längsschnitt durch eine weitere erfindungsgemäße Leuchtvorrichtung mit einem Gehäuse und einem das Gehäuse verschließenden Lichtleiter;
- Fig. 4: einen Längsschnitt durch einen einstückig mit einer Abdeckscheibe verbundenem Lichtleiter einer weiteren erfindungsgemäßen Leuchtvorrichtung;
- Fig. 5: einen Kraftfahrzeug-Außenspiegel mit einer erfindungsgemäßen Leuchtvorrichtung; und
- Fig. 6: einen Querschnitt durch den Kraftfahrzeug-Außenspiegel der Fig. 5.

In der folgenden Beschreibung der Zeichnung werden für gleiche bzw. funktionsgleiche Bauteile identische Bezugszeichen verwendet.

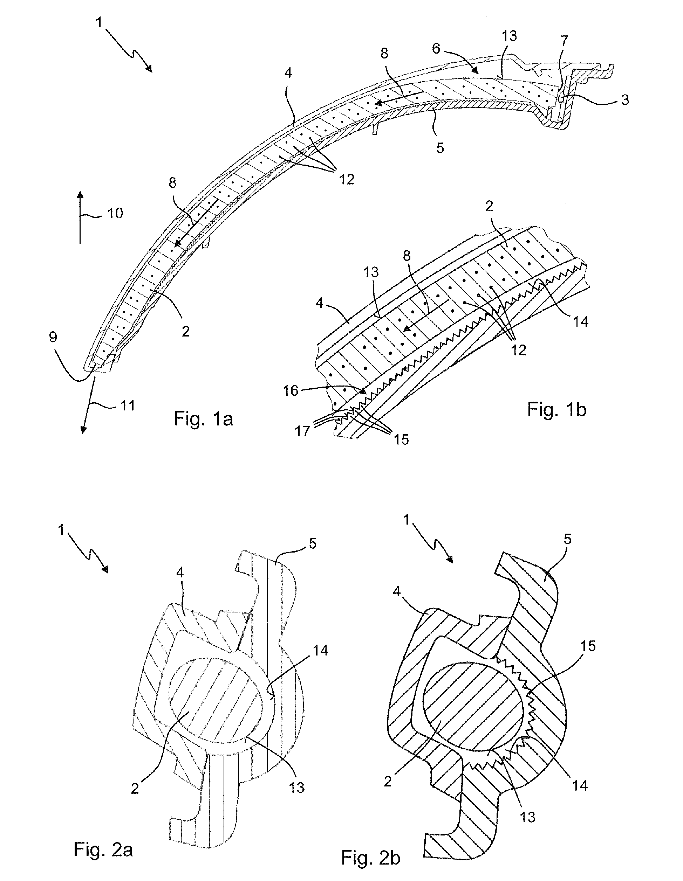

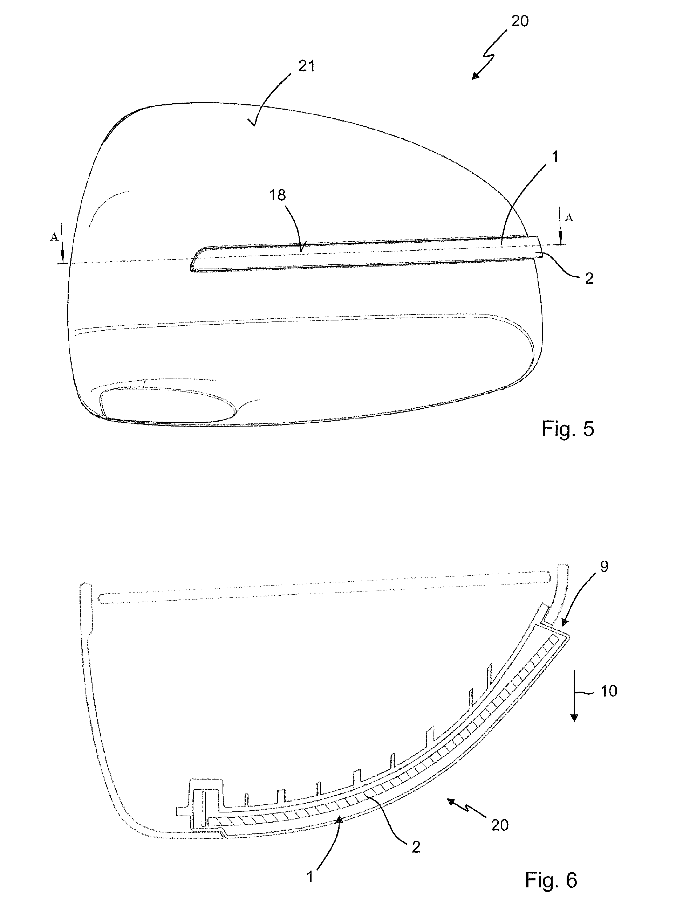

Die **Fig.1a** zeigt eine Leuchtvorrichtung **1** mit einem durch ein einziges Lichtleiterelement gebildeten Lichtleiter **2**, einer Lichtquelle **3**, einer Abdeckscheibe **4** und einem Gehäuse **5.** Die Leuchtvorrichtung 1 ist dazu geeignet, zumindest teilweise in einen Kraftfahrzeug-Außenspiegel eingesetzt zu werden (vgl. Fign. 5 und 6). In dem Längsschnitt der Fig. 1 ist die Abdeckscheibe 4 bezüglich des gekrümmt ausgebildeten Lichtleiters 2 vorder- bzw. außenseitig und das Gehäuse 5 bezüglich des Lichtleiters 2 rück- bzw. innenseitig angeordnet. Der Lichtleiter 2, die Abdeckscheibe 4 und die Lichtquelle 3 sind an dem Gehäuse 5 lösbar befestigt, wobei der Lichtleiter 2 und die Lichtquelle 3 insbesondere durch das Gehäuse 5 bzw. das Gehäuseinnere aufgenommen sind, und wobei die Abdeckscheibe 4 im in die Leuchtvorrichtung 1 eingesetzten Zustand eine vorderseitige Öffnung **6** des Gehäuses 5 verschließt. Die Abdeckscheibe 4 der Fig. 1 ist zur hindernisfreien Transmission von Lichtstrahlen aus einem glasklaren Material gefertigt.

An dem einen in der Fig. 1 a rechten Ende des Lichtleiters 2 ist eine Lichteinkoppelstelle **7** zum Einkoppeln von Licht aus der Lichtquelle 3 gebildet. An der Lichteinkoppelstelle 7 eingekoppelte Lichtstrahlung breitet sich mittels Totalreflexion an einer Lichtleiteroberfläche **13** in dem Lichtleiter 2 entlang einer Ausbreitungsrichtung **8** bis zu dem in der Fig. 1 a anderen Ende des Lichtleiters 2 aus, an dem eine Auskoppelstelle **9** zum Auskoppeln dieser Lichtstrahlung gebildet ist. Durch die Auskopplung des Lichts an der Auskoppelstelle 9 wird die für Zusatzblinkleuchten von Kraftfahrzeug- Außenspiegeln gesetzlich geforderte Ausleuchtung in eine der Fahrtrichtung **10** zumindest komponentenweise entgegengesetzte Richtung **11** erfüllt.

Der Lichtleiter 2 bzw. das Lichtleiterelement weist in seinem Inneren gleichmäßig verteilte Streupartikel **12** (bzw. Diffuserpartikel) auf. Über die Lichtquelle 3 ausgesandtes und in die Einkoppelstelle 7 eingekoppeltes Licht wirkt mit den Streupartikeln 12 im Lichtleiter 2 aufgrund von Lichtstreuung, Lichtbrechung und/oder Lichtbeugung derart zusammen, dass für einen Teil des eingekoppelten Lichts der Winkel für die Totalreflexion an der Lichtleiteroberfläche 13 unterschritten wird und in der Folge Licht über die gesamte Lichtleiterlänge in ungerichteter bzw. diffuser Art und Weise aus dem Lichtleiter 2 ausgekoppelt wird. Das durch die Streupartikel 12 an der Lichtleiteroberfläche 13 ausgekoppelte Licht kann vorteilhaft zu Designzwecken genutzt werden.

In der **Fig. 1b** ist ein Teilausschnitt der Fig. 1 a vergrößert dargestellt. Dadurch ist die Beschaffenheit der dem Lichtleiter 2 zugewandte Gehäuseinnenseite **14** des Gehäuses 5 besser erkennbar. Die Gehäuseinnenseite 14 ist reflektiv ausgebildet, d.h. sie weist eine für Licht reflektive Beschichtung auf oder das Gehäusematerial ist zumindest im Bereich der Gehäuseinnenseite 14 aus einem reflektiven Material gebildet. Darüber hinaus weist die Gehäuseinnenseite 14 eine Prismen **15** umfassende Oberflächenstruktur **16** auf.

Das über die (gesamte) Lichtleiterlänge auf die vorbeschriebene Weise ungerichtet ausgekoppelte Licht wird zunächst im Querschnitt gesehen in alle Richtungen, also auch in Richtung auf die Gehäuseinnenseite 14, von dem Lichtleiter 2 abgestrahlt. Die in Richtung auf die Gehäuseinnenseite 14 abgestrahlte Lichtstrahlung wird durch die reflektive und mit den Prismen 15 versehene Gehäuseinnenseite 14 zurück reflektiert, sodass die reflektierte Strahlung zurück durch den Lichtleiter 2 sowie anschließend durch die glasklare Abdeckscheibe 4 geleitet wird. Damit wird die gesamte aufgrund eins der Streupartikel 12 zunächst über die Oberfläche 13 des Lichtleiters 2 ausgekoppelte Lichtstrahlung letztlich nach außen (insbesondere nach vorne in Fahrtrichtung 10 bzw. seitlich) abgestrahlt und ist für Designzwecke nutzbar.

Die die einzelnen Prismen 15 zumindest teilweise bildenden Flächen **17** können als Richtflächen in eine zur Ausbreitungsrichtung 8 zwischen 45° und 90° stehenden (Vorzugs-)Richtung ausgerichtet sein. Dadurch kann eine über die Lichtleiterlänge gleichmäßigere Lichtauskopplung der diffusen Strahlung erreicht werden und somit ein homogeneres Design der Leuchtvorrichtung 1 bzw. des Kraftfahrzeug-Außenspiegels erreicht werden.

In der **Fig. 2a** ist ein radialer Querschnitt durch eine weitere Leuchtvorrichtung 1 mit einer glatten Gehäuseinnenseite 14 und in **Fig. 2b** ein entsprechender Querschnitt durch die Leuchtvorrichtung 1 der Fig. 1 gezeigt. Nicht nur die mit den Prismen 15 versehene Gehäuseinnenseite 14, sondern auch die glatte Gehäuseinnenseite 14 kann aufgrund einer beispielsweise durch Alu-Aufdampfen gebildeten reflektiven Beschichtung die vorbeschriebene Reflektion der ungerichtet aus dem Lichtleiter 2 austretenden Lichtstrahlung zurück zum Lichtleiter 2 bzw. zur Abdeckscheibe 4 bewirken.

Die Querschnittsform des Gehäuses 5 ist in den Fign. 2a und 2b an die runde bzw. elliptische Querschnittsform des Lichtleiters 2 angepasst (die Gehäuseinnenseite 14 weist in einem zentralen Gehäuseabschnitt im Wesentlichen dieselbe Krümmung auf wie die rückseitige Lichtleiteroberfläche 13). Somit ist der Lichtleiter 2 von dem Gehäuse 5 zumindest teilweise, insbesondere rückseitig, umschlossen. Die von den reflektiven Gehäuseinnenseiten 14 zurück zum Lichtleiter 2 gesandte Strahlung wird somit zusätzlich in Richtung des Lichtleiters 2 fokussiert.

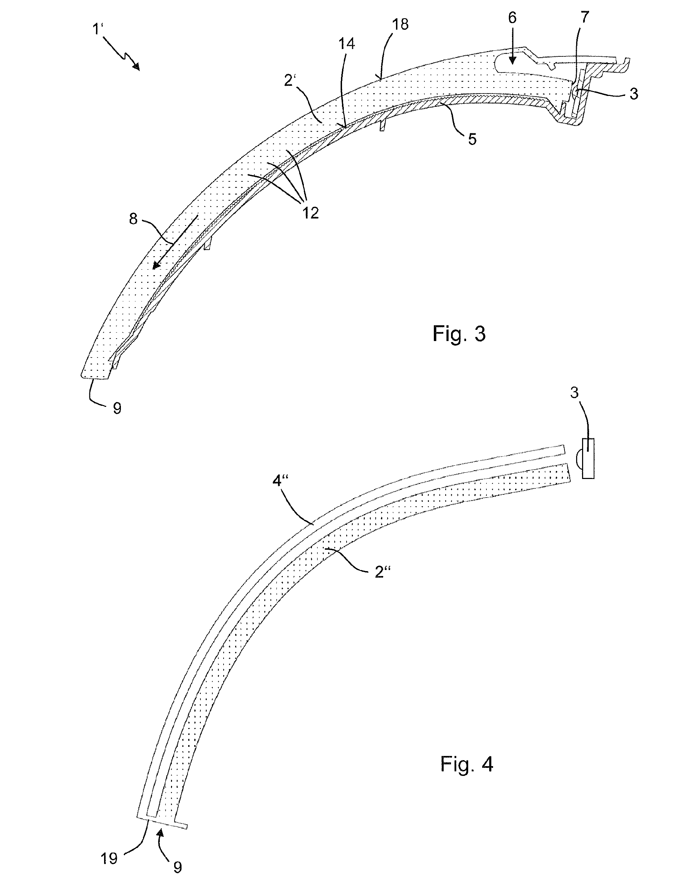

**Fig. 3** zeigt eine weitere, alternative Leuchtvorrichtung 1' mit einer Lichtquelle 3, einem Gehäuse 5 und einen Streupartikel 12 aufweisenden Lichtleiter 2'. Im Unterschied zum Lichtleiter 2 der Fign. 1 a bis 2b ist der Lichtleiter 2' in Fig. 3 dazu ausgebildet, die vorderseitige Öffnung 6 des Gehäuses 5 zu verschließen. Somit ist bei dieser Leuchtvorrichtung 1' keine separate Abdeckscheibe erforderlich. Das durch die Leuchtvorrichtung 1' an der Einkoppelstelle 7 eingekoppelte Licht wird ebenso sowohl entlang der Ausbreitungsrichtung 8 bis zur Auskoppelstelle 9 geleitet und dort zur Erfüllung der gesetzlichen Vorschriften ausgekoppelt, als auch über die gesamte Lichtleiterlänge, insbesondere an der die Gehäuseöffnung 6 verschließenden Außenseite **18** des Lichtleiters 2, ausgekoppelt.

Es versteht sich, dass die Gehäuseinnenseite 14 entsprechend der Fign 1 a bis 2b ausgebildet sein kann, sodass auch bei dieser Leuchtvorrichtung 1 in Richtung der Gehäuseinnenseite 14 ausgekoppeltes Licht zurück in Richtung des Lichtleiters 2 und durch den Lichtleiter 2 hindurch nach außen (seitlich bzw. nach vorne) ausgesendet wird.

Die **Fig. 4** zeigt eine weitere, alternative Kombination eines Lichtleiters 2" mit einer Abdeckscheibe 4". Der Lichtleiter 2" und die Abdeckscheibe 4" sind einstückig miteinander verbunden bzw. einstückig gefertigt und können zusammen mit der Lichtquelle 3 beispielsweise in ein Gehäuse gemäß Fig. 3 eingesetzt werden, um eine Leuchtvorrichtung zu bilden. Bei der in Fig. 4 dargestellten Kombination aus Lichtleiter 2" und Abdeckscheibe 4" ist die Abdeckscheibe 4" einenends über einen flächig an die Auskoppelstelle 9 des Lichtleiters 2"angeformten Steg **19** mit dem Lichtleiter 2" verbunden. Dadurch können andernfalls an der Auskoppelstelle 9 auftretende Reflektionen verhindert oder zumindest vermindert werden.

In der **Fig. 5** ist ein Kraftfahrzeug-Außenspiegel **20** mit einer Leuchtvorrichtung 1 gemäß einer der vorhergehenden Figuren in einer Frontalansicht dargestellt. Die Leuchtvorrichtung 1 ist in eine Öffnung einer Abdeckkappe des Kraftfahrzeug-Außenspiegels 21 eingesetzt und an diesem befestigt. Die Außenseite 18 des Lichtleiters 2 oder die Außenseite der Abdeckscheibe (nicht dargestellt) ist an einer Vorderseite **21** des Kraftfahrzeug-Außenspiegels 20 angeordnet und somit von vorne bzw. von außen zumindest abschnittsweise sichtbar. Die Vorderseite 21 des Kraftfahrzeug-Außenspiegels 20 weist typischerweise in die Fahrtrichtung des Kraftfahrzeugs.

**Fig. 6** zeigt schließlich einen Querschnitt durch den Kraftfahrzeug-Außenspiegel 20 der Fig. 5. Dadurch ist zum einen die vorderseitige Anordnung der Leuchtvorrichtung 1 in dem Kraftfahrzeug-Außenspiegel 20 und zum anderen die Ausrichtung der Auskoppelstelle 9 des Lichtleiters 2 bzw. der Leuchtvorrichtung 1 in eine zumindest komponentenweise entgegen der Fahrtrichtung 10 weisenden, insbesondere die gesetzlichen Werte erfüllenden, Richtung dargestellt.

Die in den Figuren 1 bis 6 dargestellten Lichtleiter 2 können ferner vorder- und/oder rückseitig optische Strukturen zur lokalen Auskopplung von Licht aufweisen (nicht dargestellt).

## Patentansprüche

1. Leuchtvorrichtung (1;1') für einen Kraftfahrzeug-Außenspiegel (20), mit einem gekrümmten und durch ein einziges Lichtleiterelement gebildeten Lichtleiter (2;2';2"), einer Lichtquelle (3), und einem Gehäuse (5) zur Aufnahme des Lichtleiters (2) und der Lichtquelle (3),
wobei das Gehäuse (5) eine dem Lichtleiter (2;2';2") zugewandte Gehäuseinnenseite (14) aufweist, und wobei der Lichtleiter (2;2';2") einenends eine Lichteinkoppelstelle (7) zum Einkoppeln von Licht aus der Lichtquelle (3) in den Lichtleiter (2;2';2") entlang einer Ausbreitungsrichtung (8) und anderenends eine Auskoppelstelle (9) zum Auskoppeln des Lichts aufweist,
**dadurch gekennzeichnet,**
**dass** das Lichtleiterelement (2;2';2") aus einem lichtstreuenden Material gebildet ist.

2. Leuchtvorrichtung (1;1') nach Anspruch 1, **dadurch gekennzeichnet, dass** das Lichtstreuende Material Streupartikel (12) aufweist.

3. Leuchtvorrichtung (1;1') nach Anspruch 1 oder 2, **dadurch gekennzeichnet, dass** an dem Lichtleiter (2; 2';2") vorder- und/oder rückseitig optische Strukturen zur lokalen Auskopplung von Licht gebildet sind.

4. Leuchtvorrichtung (1') nach einem der vorhergehenden Ansprüche, **dadurch gekennzeichnet, dass** der Lichtleiter (2') dazu ausgebildet ist, eine vorderseitige Öffnung (6) des Gehäuses (5) zu verschließen.

5. Leuchtvorrichtung (1) nach einem der Ansprüche 1 bis 3, **dadurch gekennzeichnet, dass** die Leuchtvorrichtung (1) ferner eine Abdeckscheibe (4; 4") zum Verschließen einer vorderseitigen Öffnung (6) des Gehäuses (5) umfasst, vorzugsweise aus einem glasklaren Material.

6. Leuchtvorrichtung (1) nach Anspruch 5, **dadurch gekennzeichnet, dass** die Abdeckscheibe (4") und der Lichtleiter (2") einstückig miteinander verbunden sind.

7. Leuchtvorrichtung (1) nach Anspruch 6, **dadurch gekennzeichnet, dass** die Abdeckscheibe (4") einenends über einen flächig an die Auskoppelstelle (9) des Lichtleiters (2") angeformten Steg (19) mit dem Lichtleiter (2") verbunden ist.

8. Leuchtvorrichtung (1;1') nach einem der vorhergehenden Ansprüche, **dadurch gekennzeichnet, dass** der Lichtleiter (2; 2';2") und/oder die Abdeckscheibe (4;4") aus Polymethylmethacrylate (PMMA) gefertigt sind.

9. Leuchtvorrichtung (1;1 ') nach einem der vorhergehenden Ansprüche, **dadurch gekennzeichnet, dass** die Gehäuseinnenseite (14) reflektiv ausgebildet ist.

10. Leuchtvorrichtung (1;1') nach Anspruch 9, **dadurch gekennzeichnet, dass** die Gehäuseinnenseite (14) eine Oberflächenstruktur (16), insbesondere eine Oberflächenstruktur (16) mit Noppen und/oder Prismen (15) und/oder Rillen und/oder rauen Abschnitten, aufweist.

11. Leuchtvorrichtung (1;1') nach Anspruch 10, **dadurch gekennzeichnet, dass** die Oberflächenstruktur (16) der Gehäuseinnenseite (14) eine Mehrzahl an Richtflächen (17) aufweist, die in eine Vorzugsrichtung, insbesondere in eine zur Ausbreitungsrichtung (8) zwischen 45° und 90° stehenden Richtung, ausgerichtet sind.

12. Leuchtvorrichtung (1;') nach einem der vorhergehenden Ansprüche, **dadurch gekennzeichnet, dass** die Querschnittsform des Gehäuses (5) derart an die Querschnittsform des Lichtleiters (2;2';2") angepasst ist, dass der Lichtleiter (2;2';2") von dem Gehäuse (5) zumindest teilweise, insbesondere rückseitig, umschlossen ist.

13. Kraftfahrzeug-Außenspiegel (20) mit einer Leuchtvorrichtung (1;1') nach einem der vorhergehenden Ansprüche.
